# EUROPEAN PATENT SPECIFICATION

(11) **EP 2 625 057 B1**
(45) Date of publication and mention of the grant of the patent: **04.05.2016**
(21) Application number: 11831009.3
(22) Date of filing: 04.10.2011
(51) Int. Cl.: B60K 35/00, G01P 13/00

(54) **METHOD AND SYSTEM FOR DETERMINING OPERATING STATES OF A MOTOR VEHICLE**
VERFAHREN UND SYSTEM ZUR BESTIMMUNG DER BETRIEBSZUSTÄNDE EINES KRAFTFAHRZEUGS
PROCÉDÉ ET SYSTÈME PERMETTANT DE DÉTERMINER LES ÉTATS DE FONCTIONNEMENT D'UN VÉHICULE AUTOMOBILE

(30) Priority: 07.10.2010 SE 1051052
(43) Date of publication of application: 14.08.2013
(73) Proprietor: Scania CV AB, 151 87 Södertälje (SE)
(72) Inventor: WALLEBÄCK, Peter, S-112 43 Stockholm (SE); ERIKSSON, Nils, S-120 39 Arsta (SE); JERHAMMAR, Andreas, S-146 37 Tullinge (SE)
(74) Representative: Scania CV AB
(86) International application number: PCT/SE2011/051187
(87) International publication number: WO 2012/047166

(56) References cited:
- EP-A1- 1 850 138
- WO-A1-95/10026
- JP-A- 2008 163 674
- US-A- 5 781 872
- US-A- 5 781 872
- US-A1- 2004 008 109
- US-A1- 2005 073 431
- US-B1- 6 667 726
- US-B2- 7 206 720

## Description

### TECHNICAL FIELD

The invention relates to a method for determining operating states of a motor vehicle according to the preamble of claim 1. The invention relates also to a system for determining operating states of a motor vehicle according to the preamble of claim 9. The invention relates also to a motor vehicle.

### BACKGROUND

It is currently usual to indicate how much further a motor vehicle, particularly a car, can travel before it needs refuelling, known as "distance to empty" (DTE). Such a way of informing the driver is excellent for vehicles which travel on roads at certain speeds which are substantially greater than zero towards a desired destination. DTE is not relevant in the case of vehicles which perform more stationary tasks, e.g. within an industry limited to a certain area, timber dressing or the like. If remaining vehicle availability time is more relevant, the driver will for example know whether the vehicle needs refuelling before the current shift ends.

US 7206720B2 is concerned with running time left before refuelling is needed, known as "time to empty" (TTE).

A problem is that certain vehicles have both stationary tasks and also tasks which entail travelling at speeds substantially above zero.

### OBJECT OF THE INVENTION

An object of the present invention is to propose a method for determining operating states of a motor vehicle which makes it easy to provide information about current operating states.

A further object of the present invention is to propose a system for determining operating states of a motor vehicle which makes it easy to provide information about current operating state.

### SUMMARY OF THE INVENTION

These and objects indicated by the description set out below are achieved by a method and a system for determining operating states of a motor vehicle, and by a motor vehicle of the kind indicated in the introduction, which further present the features indicated in the characterising parts of the attached independent claims 1 and 9. Preferred embodiments of the method and system are defined in the attached dependent claims 2-8 and 10-17.

According to the invention, the object is achieved with a method for determining operating states of a motor vehicle comprising the step of determining a speed state of the vehicle, comprising the steps of comparing said speed state with a predetermined speed, determining on the basis of said comparison an operating state and providing information about whether the operating state determined is a stationary state or a travelling state. This makes it easy to provide information if the vehicle is in an operating state and consequently travelling above a certain speed, or in a stationary state and consequently not travelling above said speed, which makes it easy to choose to provide information about how much time is left before the vehicle needs refuelling in the stationary state and how much further it can travel before it needs refuelling in the operating state.

According to an embodiment, the method comprises the step of determining an operating state and determining a predetermined steadiness of the specific speed state. This avoids the risk that the vehicle's intention might not be to continue for a certain time in the operating state determined, thereby making it easier to determine the correct operating state.

According to an embodiment, the method further comprises the step of determining whether said specific speed state is distinguished by a vehicle speed below said predetermined speed with at least a predetermined steadiness. This makes it possible to determine whether the vehicle's intention was to continue in a stationary state, so that the determination of stationary states is avoided where the vehicle's intention was not to continue for a certain time in the stationary state.

According to an embodiment, the method comprises the step of determining a stationary state if said vehicle speed is below said predetermined speed with at least the predetermined steadiness. This means that stationary states are only determined where the vehicle's intention was to continue in a stationary state for a certain time.

According to an embodiment, the method further comprises the step of determining whether said specific speed state is distinguished by a vehicle speed which exceeds said predetermined speed with at least a predetermined steadiness. This makes it possible to determine whether the vehicle's intention was to continue in a travelling state, so that the determination of travelling states is avoided where the vehicle's intention was not to continue for a certain time in the travelling state.

According to an embodiment, the method comprises the step of determining a travelling state if said vehicle speed corresponds to or exceeds said predetermined speed with at least the predetermined steadiness. This means that travelling states are only determined where the vehicle's intention was to continue in travelling state for a certain time.

According to an embodiment, the method comprises the step of determining a travelling state if said speed state is distinguished by a vehicle speed which exceeds a further predetermined speed greater than said predetermined speed. This makes it possible to change from stationary state to travelling state immediately when the vehicle reaches a certain speed such that its intention is to be in a travelling state.

According to an embodiment, the method comprises the step of determining times for necessary refuelling during determined stationary states. The driver thus receives relevant information about refuelling, i.e. when the vehicle is in stationary state he/she automatically receives information about how much time is left before refuelling is needed, thereby reducing the risk of running out of fuel.

According to an embodiment, the method comprises the step of determining how much further the vehicle can travel in a determined travelling state before it needs refuelling. The driver thus receives relevant information about refuelling, i.e. when the vehicle is in travelling state he/she automatically receives information about how much further it can travel before needing to refuel, thereby reducing the risk of running out of fuel.

According to the invention, the object is achieved with a system for determining operating states of a motor vehicle comprising means for determining a speed state of the vehicle, characterised by means for comparing said speed state with a predetermined speed, means for determining an operating state on the basis of said comparison, and means for providing information about whether the operating state determined is a stationary state or a travelling state. This makes it easy to provide information about whether the vehicle is in an operating state and consequently travelling above a certain speed, or in a stationary state and consequently not travelling above said speed, which makes it easy to choose to provide information about how much time is left before the vehicle needs refuelling in the stationary state and how much further it can travel before it needs refuelling in the of the travelling state.

According to an embodiment, the system comprises said means for determining an operating state and for determining a predetermined steadiness of the specific speed state. This avoids the risk that the vehicle's intention might not be to continue for a certain time in the operating state determined, thereby making it easier to determine the correct operating state.

According to an embodiment, the system further comprises means for determining whether said specific speed state is distinguished by a vehicle speed below said predetermined speed with at least a predetermined steadiness. This makes it possible to determine whether the vehicle's intention was to continue in a stationary state, so that the determination of stationary states is avoided where the vehicle's intention was not to continue for a certain time in the stationary state.

According to an embodiment, the system comprises means for determining a stationary state if said vehicle speed is below said predetermined speed with at least the predetermined steadiness. This means that only stationary states are determined where the vehicle's intention was to continue in a stationary state for a certain time.

According to an embodiment, the system further comprises means for determining whether said specific speed state is distinguished by a vehicle speed which exceeds said predetermined speed with at least a predetermined steadiness. This makes it possible to determine whether the vehicle's intention was to continue in a travelling state, so that the determination of travelling states is avoided where the vehicle's intention was not to continue for a certain time in the travelling state.

According to an embodiment, the system comprises means for determining a travelling state if said vehicle speed corresponds to or exceeds said predetermined speed with at least the predetermined steadiness. This means that travelling states are only determined where the vehicle's intention was to continue in travelling states for a certain time.

According to an embodiment, the system comprises means for determining travelling states if said speed state is distinguished by a vehicle speed which exceeds a further predetermined speed greater than said predetermined speed. This makes it possible to change from stationary state to travelling state immediately when the vehicle reaches a certain speed such that its intention is to be in a travelling state.

According to an embodiment, the system comprises means for determining times for necessary refuelling during determined stationary states. The driver thus receives relevant information about refuelling, i.e. when the vehicle is in a stationary state he/she automatically receives information about how much time is left before refuelling is needed, thereby reducing the risk of running out of fuel.

According to an embodiment, the system comprises means for determining how much further the vehicle can travel in a determined travelling state before it needs refuelling. The driver thus receives relevant information about refuelling, i.e. when the vehicle is in travelling state he/she automatically receives information about how much further it can travel before needing to refuel, thereby reducing the risk of running out of fuel.

### DESCRIPTION OF DRAWINGS

The present invention will be better understood by reading the following detailed description together with the attached drawings, in which the same reference notations refer to similar items throughout the many views, in which:
Fig. 1 is a schematic side view of a motor vehicle;
Fig. 2 depicts schematically a system for determining operating states of a motor vehicle according to an embodiment of the present invention;
Fig. 3 is a schematic block diagram of a method for determining an operating state according to an embodiment of the present invention;
Fig. 4a depicts schematically the variation of a vehicle's speed with time;
Fig. 4b depicts schematically how vehicle states change according to the system in Fig. 2 and the method in Fig. 3 with the speed variation in Fig. 4a; and
Fig. 5 is a schematic block diagram of a method for determining an operating state according to an embodiment of the present invention.

### DESCRIPTION OF EMBODIMENTS

The term "operating state" means herein a state in which the vehicle is running, i.e. its engine is activated/switched on in a travelling state or a stationary state.

The term "travelling state" means herein a state in which the vehicle is travelling or is within a certain predetermined time intended to travel at a speed which corresponds to or exceeds a predetermined threshold value.

The term "stationary state" means herein a state in which the vehicle is stationary or travelling at a certain speed below said predetermined threshold value.

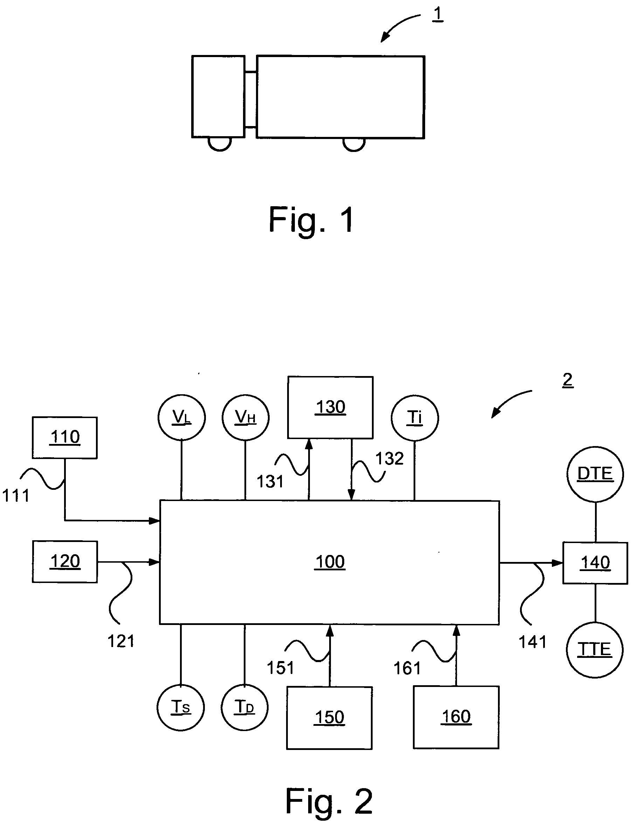

Figure 1 depicts a side view of a vehicle 1. The exemplified vehicle 1 is a heavy vehicle in the form of a truck, e.g. a commercial vehicle. The vehicle may alternatively be a bus or a car. The vehicle is provided with a system for determining operating states of a motor vehicle according to the present invention. Fig. 2 is a schematic block diagram of a system 2 for determining an operating state according to an embodiment of the present invention.

The system 2 comprises an electronic control unit 100 for controlling the vehicle's systems. The electronic control unit 100 is signal-connected via a link 111 to a vehicle activation means 110 for activating the vehicle so that it changes from a non-operating state to an operating state, i.e. its engine is started or at least the ignition is switched on. The electronic control unit 100 is arranged to receive from said vehicle activation means 110 via the link a signal which represents vehicle activation data.

The electronic control unit 100 is arranged to compare said vehicle activation data with a predetermined vehicle activation value which represents the vehicle being activated, i.e. the engine changing from being switched off to running.

According to an embodiment of the present invention, when said vehicle activation value is fulfilled, i.e. where the vehicle's engine changes from being switched off to running the electronic control unit 100 is arranged to, to activate a travelling state D so that the system 2 at the time of starting the vehicle is put into said travelling state D, i.e. the system 2 assumes that the vehicle is regarded as being as soon as possible run at a certain speed which corresponds to or is higher than a low threshold value V_{L}, i.e. the vehicle is not regarded as being in a stationary state S.

According to an alternative embodiment of the present invention, when said vehicle activation value is fulfilled, i.e. where the vehicle's engine changes from being switched off to running, the electronic control unit 100 is arranged to activate a stationary state S so that the system 2 at the time of starting the vehicle is put into said stationary state S, i.e. the system assumes that the vehicle is regarded as being in a stationary state S and is consequently travelling at a speed below said low threshold value V_{L}.

The electronic control unit 100 is signal-connected via a link 121 to a speed detection means 120 which is adapted to monitoring the vehicle speed. The electronic control unit 100 is arranged to receive from the speed detection means 120 via a link a signal which represents vehicle speed data.

The electronic control unit 100 is signal-connected via a first link 131 and a second link 132 to a timer unit 130 which is adapted to incrementing or decrementing. The electronic control unit 100 is arranged to send to the timer unit 130 via the first link 131 a signal which represents activation data for activating the timer unit 130 to increment or decrement. The electronic control unit 100 is arranged to receive from the timer unit 130 via the second link 132 a signal which represents timer data. According to a variant, the timer unit 130 is an integral part of the electronic control unit 100.

The electronic control unit 100 is arranged to compare said vehicle speed data with predetermined vehicle speed threshold values V_{L}, V_{H}. Said threshold values comprise a low threshold value V_{L} and a high threshold value V_{H} which is higher than the low threshold value V_{L}.

The electronic control unit 100 is signal-connected via a link 141 to an operating state unit 140 for activation of the latter for provision of information about operating states. According to this embodiment, the operating state unit 140 is arranged to provide information about time left before refuelling is needed (TTE) or how much further the vehicle can travel before needing refuelling (DTE).

According to an embodiment of the present invention, when said vehicle activation value is fulfilled and a travelling state D is activated, the electronic control unit 100 is arranged to set a decrement initiation time Ti which represents how long the timer unit 130 has to decrement before a predetermined decrement threshold value T_{S} is fulfilled.

During decrementing from said decrement initiation time Ti, the electronic control unit 100 is arranged to compare timer data with said decrement threshold value T_{S}. When said decrement threshold value T_{S} is reached, the electronic control unit 100 is arranged to send to the operating state unit 140 via a link a signal which represents data for stationary state, whereupon the operating state unit 140 is arranged to change the state from travelling state D to stationary state S, and to provide information about time left before needing to refuel (TTE).

According to an embodiment of the present invention, when said vehicle activation value is fulfilled and a stationary state S is activated, the electronic control unit 100 is arranged to set an initiation time which represents how long the timer unit 130 has to increment before a predetermined increment threshold value T_{D} is fulfilled.

During incrementing from said increment initiation time, the electronic control unit 100 is arranged to compare timer data with said increment threshold value T_{D}. When said increment threshold value T_{D} is reached, the electronic control unit 100 is arranged to send to the operating state unit 140 via a link a signal which represents travelling state data, whereupon the operating state unit 140 is arranged to change the state from stationary state to travelling state D, and to provide information about how much further the vehicle can travel before needing to refuel (DTE).

In operating states of the vehicle where said vehicle speed data are below said low threshold value V_{L}, the electronic control unit 100 is arranged to send to the timer unit 130 via said first link signals to activate decrementing so that the timer unit 130 begins to decrement..

When the timer unit 130 is activated to decrement, the electronic control unit 100 is arranged to receive via the link 131 signals which represent decrement timer data. The electronic control unit 100 is arranged to compare said decrement timer data with said predetermined decrement threshold value T_{S}.

When said decrement timer data amount to at least said decrement threshold value T_{S}, the electronic control unit 100 is arranged to send to the operating state unit 140 a signal to change operating state to stationary state S.

In operating states of the vehicle where said vehicle speed data are equal to or exceed said low threshold value V_{L}, the electronic control unit 100 is arranged to send to the timer unit 130 via said first link 131 signals to activate incrementing so that the timer unit 130 begins to increment.

When the timer unit 130 is activated to increment, the electronic control unit 100 is arranged to receive via the link 131 signals which represent increment timer data. The electronic control unit 100 is arranged to compare said increment timer data with said predetermined increment threshold value T_{D}.

When said increment timer data amount to at least said increment threshold value T_{D}, the electronic control unit 100 is arranged to send a signal to the operating state unit 140 to change operating state to travelling state D.

The electronic control unit 100 is arranged to compare said vehicle speed data with said predetermined vehicle speed high threshold value V_{H}. If said vehicle speed data exceed said high threshold value V_{H}, the electronic control unit 100 is arranged to send to the operating state unit 140 via the link 141 a signal to change immediately to travelling state without taking timer data into account, i.e. without catering for time for incrementing of the timer unit 130.

According to an embodiment, the electronic control unit 100 is signal-connected via a link 151 to a parking brake unit 150. The electronic control unit 100 is arranged to receive from said parking brake unit 150 a signal which represents parking brake data about whether the parking brake unit 150 is activated. The electronic control unit 100 is adapted to comparing said parking brake data with a predetermined parking brake activation value. When said parking brake activation value is fulfilled, i.e. when the parking brake unit 150 is activated, the electronic control unit 100 is arranged to send to the operating state unit 140 a signal to change the operating state to stationary state without catering for time for decrementing of the timer unit.

According to an embodiment, the electronic control unit 100 is signal-connected via a link 161 to a vehicle transmission unit 160. The electronic control unit 100 is arranged to receive from said vehicle transmission unit 160 a signal which represents transmission state data about whether said transmission unit 160 is in neutral position/parking position. The electronic control unit 100 is arranged to compare said transmission state data with a predetermined transmission state value. When said transmission state value is fulfilled, i.e. when the vehicle transmission unit 160 is activated, the electronic control unit 100 is arranged to send to the operating state unit 140 a signal to change the operating state to stationary state.

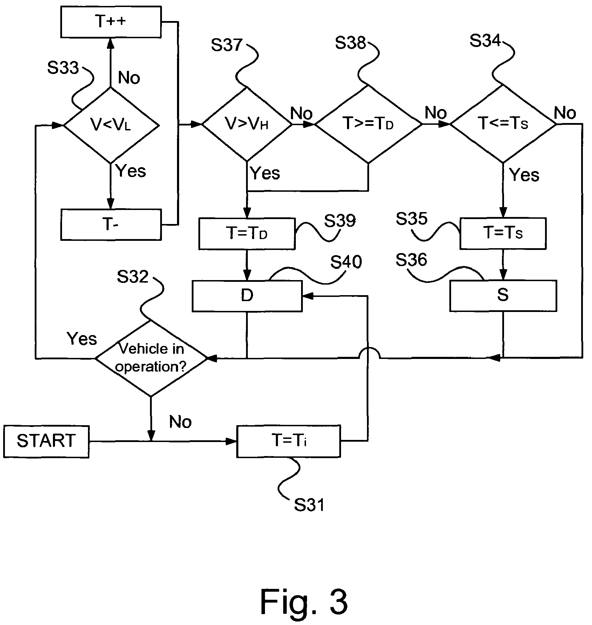

Fig. 3 is a schematic block diagram of a method for determining operating states of a motor vehicle according to an embodiment of the present invention. Determination of operating states involves providing information about whether determined operating states are a stationary state S, in which case a time to needing to refuel (TTE) is determined, or a travelling state D, in which case a distance to needing to refuel (DTE) is determined. The primary state is regarded as being travelling state D, which is initiated when starting the vehicle so that information about DTE is determined.

The method comprises the step S31 of setting the time T of a timer unit 130 according to Fig. 2 to an initiation time Ti which determines the initial time for a vehicle to pass the low threshold value V_{L} before switching to stationary state S.

A step S32 of the method investigates whether the vehicle is in operation. If it is not, the method is reset.

If the vehicle is in operation, a method step S33 investigates whether its speed V is lower than the low threshold value V_{L}. If it is, then the timer unit 130 will decrement.

A method step S34 then investigates whether said decrement threshold value T_{S} is fulfilled, i.e. whether the decrement time T of the timer unit 130 is equal to or lower than said decrement threshold value T_{S}. If it is, then a method step S35 will set the decrement time T to the decrement threshold value T_{S}, whereupon a method step S36 changes the operating state to stationary state S so that information about TTE is provided.

If the decrement threshold value T_{S} is not fulfilled, this calls for investigation as to whether the vehicle is running, and if it is, then method step S33 investigates whether the speed V is lower than the low threshold value V_{L}.

If the vehicle speed V is higher than or equal to the low threshold value V_{L}, a method step S37 investigates whether it is higher than the high threshold value V_{H}. If it is, then the increment time of the timer unit 130 will be set to the increment threshold value T_{D}, whereupon the stationary state changes to travelling state D so that information about DTE is provided. Thereupon the operating state changes to travelling state D irrespective of whether said increment time T fulfils the increment threshold value T_{D}, i.e. the operating state is set to travelling state as soon as the vehicle speed V exceeds said high threshold value V_{H}.

If the vehicle speed V is higher than or equal to the low threshold value V_{L} but does not exceed the high threshold value V_{H}, the timer unit 130 will increment. A method step S38 then investigates whether said increment threshold value T_{D} is fulfilled, i.e. whether the increment time T of the timer unit 130 is equal to or lower than said increment threshold value T_{D}. If it is, then a method step S39 will set the increment time T to the increment threshold value T_{D}, whereupon a method step S40 changes the operating state to travelling state D so that information about DTE is provided.

Consequently, if the operating state is travelling state D and the vehicle speed V is below the low threshold value V_{L} so that the timer unit 130 decrements and the vehicle speed V then increases and becomes higher than the low threshold value V_{L} before the timer unit 130 has decremented to the decrement threshold value T_{S}, the timer unit 130 will instead begin to increment, thereby maintaining the travelling state D.

Similarly, if the operating state is stationary state S and the vehicle speed V is higher than or equal to the low threshold value V_{L} so that the timer unit 130 increments and the vehicle speed V then decreases to below the low threshold value V_{L} before the timer unit 130 has incremented to the increment threshold value T_{D}, the timer unit 130 will instead begin to decrement, thereby maintaining the stationary state S.

In the case of a vehicle which operates both in stationary state S and in travelling state D, the driver will, without needing to take any action him/herself, receive correct information about refuelling, i.e. the relevant information at a given time. The driver will be informed about TTE when operating in stationary state S, and about DTE when operating in travelling state D in which the vehicle travels at a speed exceeding said low threshold value V_{L}.

Switching between stationary state S and travelling state D is also based not only on vehicle speed V but also on steadiness T of vehicle speed, i.e. vehicle speed being above or below the low threshold value V_{L} for a certain time, i.e. the time during which the timer unit 130 increments or decrements. This means that the driver will not be disturbed unnecessarily by unnecessary switches between stationary state S and travelling state D, e.g. when the operating state shifts from travelling state D to stationary state S at red traffic lights. Vehicles with stationary tasks may also move at medium-high speeds for a certain time without departing from stationary state S.

The vehicle will also assume travelling state D as soon as its speed V exceeds said high threshold value V_{H}, so that it does not continue in stationary state S at times when it is obvious that the intention is to be in travelling state D.

The separate initiation time Ti may be adjusted so that travelling state D is maintained for a desired length of time initially even if the vehicle is idling.

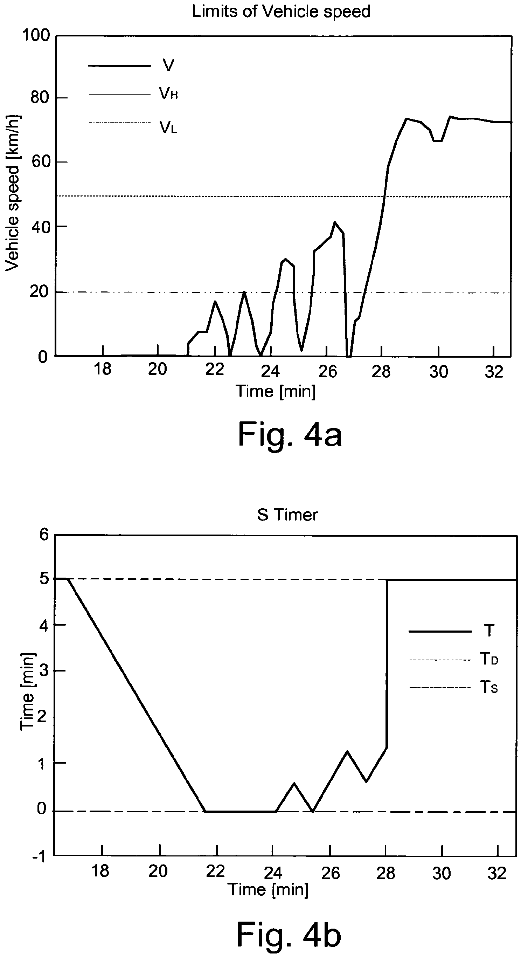

Fig. 4a depicts schematically the variation in a vehicle's speed with time, and Fig. 4b depicts schematically how vehicle states change according to the system in Fig. 2 with the speed variation in Fig. 4a.

Thus the vehicle is put into operating state when the operating state is set to travelling state D, i.e. the vehicle is started, at a time of about 16 minutes. The vehicle has thereafter a speed which is zero until about 21 minutes and then increases to nearly 20 km/h at 22 minutes before dropping to about zero, rises again to nearly 20 km/h and then drops again so that at about 24 minutes it goes above the low threshold value V_{L} then goes below the low threshold value V_{L} and down to about zero before rising back above the low threshold value V_{L} and dropping to zero and thereafter, from about 27 minutes, exceeds the low threshold value V_{L} and at about 28 minutes exceeds the high threshold value V_{H}.

As may be seen in Fig. 4b, the initiation time Ti is set at 5 minutes, i.e. the timer unit 130 has to decrement for a total of 5 minutes, this being the aggregate of increment time and decrement time, before change of operating state from travelling state D to stationary state S takes place. In the case according to Figs. 4a, and 4b, the timer unit 130 decrements, as shown in Fig. 4b, to the decrement threshold value T_{S} of zero, which takes 5 minutes, which is the time for which the vehicle speed V is below the low threshold value V_{L}. When for the first time the speed V corresponds to or exceeds the low threshold value V_{L} at about 24 minutes, the timer unit 130 will begin to increment. Once the speed V is below the low threshold value V_{L}, the timer unit 130 will revert to decrementing, and once the low threshold value V_{L} is exceeded the timer unit 130 will again increment. The timer unit 130 increments and decrements while the speed V varies above and below said low threshold value V_{L}. When the speed V at about 28 minutes exceeds the high threshold value V_{H}, which is set at 50 km/h, the operating state shifts from stationary state S to travelling state D without the timer unit 130 having incremented to the increment threshold value T_{D}.

Here the initiation time Ti is set at 5 minutes, corresponding in this example to the increment threshold value T_{D}. According to an alternative variant, the initiation time Ti may be different from the increment threshold value T_{D}. The initiation time is within the range of being larger than or equal to the decrement threshold value T_{S} and smaller than or equal to the increment threshold value T_{D}.

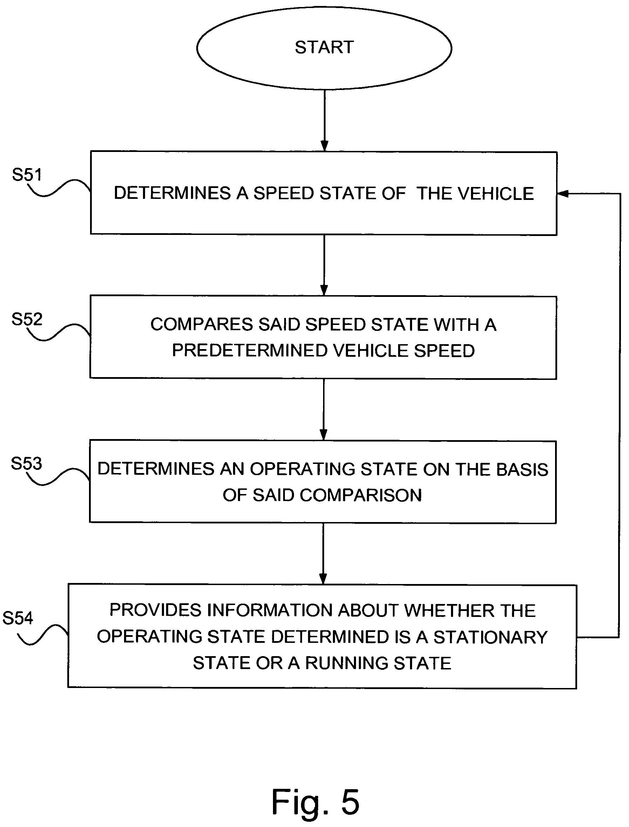

Fig. 5 is a schematic block diagram of a method for determining an operating state according to an embodiment of the present invention.

According to an embodiment, the method for determining operating states of a motor vehicle comprises a first step S51 which determines a speed state of the vehicle.

According to an embodiment, the method for determining operating states of a motor vehicle comprises a second step S52 which compares said speed state with a predetermined speed.

According to an embodiment, the method for determining operating states of a motor vehicle comprises a third step S53 which determines an operating state on the basis of said comparison.

According to an embodiment, the method for determining operating states of a motor vehicle comprises a fourth step S54 which provides information about whether the operating state determined is a stationary state or a travelling state.

The above description of the preferred embodiments of the present invention is provided for illustrative and descriptive purposes. It is not intended to be exhaustive or to restrict the invention to the variants described. Many modifications and variations will obviously suggest themselves to specialists. The embodiments were chosen and described in order best to explain the principles of the invention and practical applications thereof and thereby enable one skilled in the art to understand the invention for different embodiments and with the various modifications applicable to the intended use.

## Claims

1. A method for determining operating states (D, S) of a motor vehicle (1) comprising the step of determining a speed state (V) of the vehicle, comprising the steps of
- comparing (S33, S52, S37) said speed state (V) with a predetermined vehicle speed (V_{L}, V_{H}),
- determining (S36, S40, S34, S38, S53) an operating state (D, S) on the basis of said comparison, and
- providing information about whether the operating state determined is a stationary state (S) or a travelling state (D),
**characterised in that**
- the step of determining an operating state comprises determining (S34, S38) a predetermined duration of the specific speed state, and, further comprising the step of determining (S33) whether said specific speed state (V) is distinguished by a vehicle speed which is below said predetermined speed (V_{L}) with at least a predetermined duration (T_{S}), wherein said method is comprising the step of:
- determining times to necessary refuelling (TTE) pertaining to stationary states (S) determined, or
- determining distances to necessary refuelling (DTE) pertaining to travelling states (D) determined.

2. A method according to claim 1, comprising the step of determining (S36) a stationary state (S) if said vehicle speed is below said predetermined speed (V_{L}) with at least the predetermined duration (T_{S}).

3. A method according to claim 1, further comprising the step of determining (S33) whether said specific speed state (V) is distinguished by a vehicle speed which exceeds said predetermined speed (V_{L}) with at least a predetermined duration (T_{D}).

4. A method according to claim 3, comprising the step of determining (S40) a travelling state (D) if said vehicle speed corresponds to or exceeds said predetermined speed (V_{L}) with at least the predetermined duration (T_{D}).

5. A method according to any one of the foregoing claims, comprising the step of determining (S40) a travelling state if said speed state (V) is distinguished by a vehicle speed which exceeds a further predetermined speed (V_{H}) greater than said predetermined speed (V_{L}).

6. A system for determining operating states (D, S) of a motor vehicle (1) comprising means (120) for determining a speed state (V) of the vehicle, comprising means (100) for comparing said speed state (V) with a predetermined speed, means (100, 130) for determining an operating state (D, S) on the basis of said comparison, and means (140) for providing information about whether an operating state determined is a stationary state (S) or a travelling state (D), **characterised in that** said means (100, 130) for determining an operating state comprise means (130) for determining a predetermined duration of the specific speed state (D, S), and comprising means (100) for determining whether said specific speed state (V) is distinguished by a vehicle speed which is below said predetermined speed (V_{L}) with at least a predetermined duration (T_{S}), wherein said system is comprising means for:
- determining times to necessary refuelling (TTE) pertaining to the stationary state (S) determined, or
- determining distances to necessary refuelling (DTE) pertaining to the travelling state (D) determined.

7. A system according to claim 6, comprising means (100) for determining a stationary state (S) if said vehicle speed is below said predetermined speed (V_{L}) with at least the predetermined duration (T_{S}).

8. A system according to claim 6, further comprising means (100) for determining whether said specific speed state (V) is distinguished by a vehicle speed which exceeds said predetermined speed (V_{L}) with at least a predetermined duration (T_{S}).

9. A system according to claim 8, comprising means (100, 140) for determining a travelling state (D) if said vehicle speed corresponds to or exceeds said predetermined speed (V_{L}) with at least the predetermined duration (T_{D}).

10. A system according to any one of claims 6-9, comprising means (100) for determining travelling state (D) if said speed state (V) is distinguished by a vehicle speed which exceeds a further predetermined speed (V_{H}) greater than said predetermined speed (V_{L}).

11. A motor vehicle comprising a system according to any one of claims 6-10.

## Patentansprüche

1. Verfahren zum Bestimmen von Betriebszuständen (D, S) eines Kraftfahrzeugs (1), umfassend den Schritt des Bestimmens eines Geschwindigkeitszustands (V) des Fahrzeugs, umfassend die Schritte
- Vergleichen (S33, S52, S37) des Geschwindigkeitszustands (V) mit einer vorbestimmten Fahrzeuggeschwindigkeit (V_{L}, V_{H}),
- Bestimmen (S36, S40, S34, S38, S53) eines Betriebszustands (D, S) basierend auf dem Vergleich, und
- Bereitstellen von Informationen darüber, ob der bestimmte Betriebszustand ein stationärer Zustand (S) oder ein Fahrzustand (D) ist,
**dadurch gekennzeichnet, dass**
- der Schritt des Bestimmens eines Betriebszustands, Bestimmen (S34, S38) einer vorbestimmten Dauer des spezifischen Geschwindigkeitszustands umfasst, und ferner umfassend den Schritt des Bestimmens (S33), ob der spezifische Geschwindigkeitszustand (V) durch eine Fahrzeuggeschwindigkeit unterschieden wird, welche mit mindestens einer vorbestimmten Dauer (T_{S}) niedriger ist als die vorbestimmte Geschwindigkeit (V_{L}), wobei das Verfahren den Schritt umfasst:
- Bestimmen von Zeiten zum notwendigen Tanken (TTE), betreffend die bestimmten stationären Zustände (S), oder
- Bestimmen von Entfernungen zum notwendigen Tanken (DTE), betreffend die bestimmten Fahrzustände (D).

2. Verfahren nach Anspruch 1, umfassend den Schritt des Bestimmens (S36) eines stationären Zustands (S), wenn die Fahrzeuggeschwindigkeit mit mindestens der vorbestimmten Dauer (T_{S}) niedriger ist als die vorbestimmte Geschwindigkeit (V_{L}).

3. Verfahren nach Anspruch 1, ferner umfassend den Schritt des Bestimmens (S33), ob der spezifische Geschwindigkeitszustand (V) durch eine Fahrzeuggeschwindigkeit unterschieden wird, welche die vorbestimmte Geschwindigkeit (V_{L}) mit mindestens einer vorbestimmten Dauer (T_{D}) überschreitet.

4. Verfahren nach Anspruch 3, umfassend den Schritt des Bestimmens (S40) eines Fahrzustands (D), wenn die Fahrzeuggeschwindigkeit mit mindestens der vorbestimmten Dauer (T_{D}) der vorbestimmten Geschwindigkeit (V_{L}) entspricht oder sie überschreitet.

5. Verfahren nach einem der vorangegangenen Ansprüche, umfassend den Schritt des Bestimmens (S40) eines Fahrzustands, wenn der Geschwindigkeitszustand (V) durch eine Fahrzeuggeschwindigkeit unterschieden wird, welche eine weitere vorbestimmte Geschwindigkeit (V_{H}), größer als die vorbestimmte Geschwindigkeit (V_{L}), überschreitet.

6. System zum Bestimmen von Betriebszuständen (D, S) eines Kraftfahrzeugs (1), umfassend Mittel (120) zum Bestimmen eines Geschwindigkeitszustands (V) des Fahrzeugs, umfassend Mittel (100) zum Vergleichen des Geschwindigkeitszustands (V) mit einer vorbestimmten Geschwindigkeit, Mittel (100, 130) zum Bestimmen eines Betriebszustands (D, S) basierend auf dem Vergleich, und Mittel (140) zum Bereitstellen von Informationen darüber, ob ein bestimmter Betriebszustand ein stationärer Zustand (S) oder ein Fahrzustand (D) ist, **dadurch gekennzeichnet, dass** die Mittel (100, 130), zum Bestimmen eines Betriebszustands, Mittel (130) zum Bestimmen einer vorbestimmten Dauer des spezifischen Geschwindigkeitszustands (D, S) umfassen, und
umfassend Mittel (100) zum Bestimmen, ob der spezifische Geschwindigkeitszustand (V) durch eine Fahrzeuggeschwindigkeit unterschieden wird, welche mit mindestens einer vorbestimmten Dauer (TS) niedriger ist als die vorbestimmte Geschwindigkeit (V_{L}), wobei das System Mittel umfasst zum:
- Bestimmen von Zeiten zum notwendigen Tanken (TTE), betreffend den bestimmten stationären Zustand (S), oder
- Bestimmen von Entfernungen zum notwendigen Tanken (DTE), betreffend den bestimmten Fahrzustand (D).

7. System nach Anspruch 6, umfassend Mittel (100) zum Bestimmen eines stationären Zustands (S), wenn die Fahrzeuggeschwindigkeit mit mindestens der vorbestimmten Dauer (T_{S}) niedriger ist als die vorbestimmte Geschwindigkeit (V_{L}).

8. System nach Anspruch 6, ferner umfassend Mittel (100) zum Bestimmen, ob der spezifische Geschwindigkeitszustand (V) durch eine Fahrzeuggeschwindigkeit unterschieden wird, welche die vorbestimmte Geschwindigkeit (V_{L}) mit mindestens einer vorbestimmten Dauer (T_{S}) überschreitet.

9. System nach Anspruch 8, umfassend Mittel (100, 140) zum Bestimmen eines Fahrzustands (D), wenn die Fahrzeuggeschwindigkeit mit mindestens der vorbestimmten Dauer (T_{D}) der vorbestimmten Geschwindigkeit (V_{L}) entspricht oder sie überschreitet.

10. System nach einem der Ansprüche 6 bis 9, umfassend Mittel (100) zum Bestimmen eines Fahrzustands (D), wenn der Geschwindigkeitszustand (V) durch eine Fahrzeuggeschwindigkeit unterschieden wird, welche eine weitere vorbestimmte Geschwindigkeit (V_{H}), größer als die vorbestimmte Geschwindigkeit (V_{L}), überschreitet.

11. Kraftfahrzeug, umfassend ein System nach einem der Ansprüche 6 bis 10.

## Revendications

1. Procédé de détermination d'états de fonctionnement (D, S) d'un véhicule à moteur (1) comprenant l'étape de détermination d'un état de vitesse (V) du véhicule, comprenant les étapes de
- comparaison (S33, S52, S37) dudit état de vitesse (V) à une vitesse de véhicule prédéterminée (V_{L}, V_{H}),
- détermination (S36, S40, S34, S38, S53) d'un état de fonctionnement (D, S) en fonction de ladite comparaison, et
- fourniture d'informations concernant le fait que l'état de fonctionnement déterminé est un état stationnaire (S) ou un état de déplacement (D),
**caractérisé en ce que**
- l'étape de détermination d'un état de fonctionnement comprend la détermination (S34, S38) d'une durée prédéterminée de l'état de vitesse spécifique, et, comprend en outre l'étape de détermination (S33) du fait que ledit état de vitesse spécifique (V) se distingue par une vitesse du véhicule qui est inférieure à ladite vitesse prédéterminée (V_{L}) pendant au moins une durée prédéterminée (T_{S}), ledit procédé comprenant l'étape de :
- détermination de temps restants avant nécessité de réapprovisionnement en carburant (TTE) en lien avec des états stationnaires (S) déterminés, ou
- détermination de distances restantes avant nécessité de réapprovisionnement en carburant (DTE) en lien avec des états de déplacement (D) déterminés.

2. Procédé selon la revendication 1, comprenant l'étape de détermination (S36) d'un état stationnaire (S) si ladite vitesse du véhicule est inférieure à ladite vitesse prédéterminée (V_{L}) pendant au moins la durée prédéterminée (T_{S}).

3. Procédé selon la revendication 1, comprenant en outre l'étape de détermination (S33) du fait que ledit état de vitesse spécifique (V) se distingue par une vitesse du véhicule qui excède ladite vitesse prédéterminée (V_{L}) pendant au moins une durée prédéterminée (T_{D}).

4. Procédé selon la revendication 3, comprenant l'étape de détermination (S40) d'un état de déplacement (D) si ladite vitesse du véhicule correspond à ou excède ladite vitesse prédéterminée (V_{L}) pendant au moins la durée prédéterminée (T_{D}).

5. Procédé selon l'une quelconque des revendications précédentes, comprenant l'étape de détermination (S40) d'un état de déplacement si ledit état de vitesse (V) se distingue par une vitesse du véhicule qui excède une autre vitesse prédéterminée (V_{H}) supérieure à ladite vitesse prédéterminée (V_{L}).

6. Système pour déterminer des états de fonctionnement (D, S) d'un véhicule à moteur (1) comprenant des moyens (120) pour déterminer un état de vitesse (V) du véhicule, comprenant des moyens (100) pour comparer ledit état de vitesse (V) à une vitesse prédéterminée, des moyens (100, 130) pour déterminer un état de fonctionnement (D, S) en fonction de ladite comparaison, et des moyens (140) pour fournir des informations concernant le fait qu'un état de fonctionnement déterminé est un état stationnaire (S) ou un état de déplacement (D), **caractérisé en ce que** lesdits moyens (100, 300) pour déterminer un état de fonctionnement comprennent des moyens (130) pour déterminer une durée prédéterminée de l'état de vitesse spécifique (D, S), et comprenant des moyens (100) pour déterminer si ledit état de vitesse spécifique (V) se distingue par une vitesse du véhicule qui est inférieure à ladite vitesse prédéterminée (V_{L}) pendant au moins une durée prédéterminée (T_{S}), ledit système comprenant des moyens pour :
- déterminer des temps restants avant nécessité de réapprovisionnement en carburant (TTE) en lien avec l'état stationnaire (S) déterminé, ou
- déterminer des distances restantes avant nécessité de réapprovisionnement en carburant (DTE) en lien avec l'état de déplacement (D) déterminé.

7. Système selon la revendication 6, comprenant des moyens (100) pour déterminer un état stationnaire (S) si ladite vitesse du véhicule est inférieure à ladite vitesse prédéterminée (V_{L}) pendant au moins la durée prédéterminée (T_{S}).

8. Système selon la revendication 6, comprenant en outre des moyens (100) pour déterminer si ledit état de vitesse spécifique (V) se distingue par une vitesse du véhicule qui excède ladite vitesse prédéterminée (V_{L}) pendant au moins une durée prédéterminée (T_{S}).

9. Système selon la revendication 8, comprenant des moyens (100, 140) pour déterminer un état de déplacement (D) si ladite vitesse du véhicule correspond à ou excède ladite vitesse prédéterminée (V_{L}) pendant au moins la durée prédéterminée (T_{D}).

10. Système selon l'une quelconque des revendications 6 à 9, comprenant des moyens (100) pour déterminer un état de déplacement (D) si ledit état de vitesse (V) se distingue par une vitesse du véhicule qui excède une autre vitesse prédéterminée (V_{H}) supérieure à ladite vitesse prédéterminée (V_{L}).

11. Véhicule à moteur comprenant un système selon l'une quelconque des revendications 6 à 10.
